# EUROPÄISCHE PATENTSCHRIFT

(11) **EP 0 598 931 B1**
(45) Veröffentlichungstag und Bekanntmachung des Hinweises auf die Patenterteilung: **27.02.2002**
(21) Anmeldenummer: 92119844.6
(22) Anmeldetag: 20.11.1992
(51) Int. Cl.: H04Q 11/04, H04M 3/24

(54) **Verfahren zur Überwachung bestehender Fernsprechverbindungen, insbesondere permanent geschalteter Fernsprechverbindungen**
Method for the control of switched telephone connections, especially permanent switched telephone connections
Procédé pour le contrôle de connexions téléphoniques existantés, en particulier des connexions téléphoniques commutées d'une façon permanente

(43) Veröffentlichungstag der Anmeldung: 01.06.1994
(73) Patentinhaber: SIEMENS AKTIENGESELLSCHAFT, 80333 München (DE)
(72) Erfinder: Nagler, Werner, Dipl.-Ing., W-8021 Schäftlarn (DE); Glöss, Bernhard, Dipl.-Ing., W-8000 München 83 (DE)

(56) Entgegenhaltungen:
- EP-A- 0 027 226
- EP-A- 0 250 936
- DE-A- 2 845 393
- DE-A- 3 513 165
- GB-A- 2 141 606
- US-A- 4 064 369
- IEEE GLOBAL TELECOMMUNICATIONS CONFERENCE - PAPER 18.2 Bd. 2, November 1983, SAN DIEGO (US) Seiten 617 - 621 DICKEY ET AL 'Aspects of Network Maintenance in a Distributed Digital Exchange'
- BRITISH TELECOMMUNICATIONS ENGINEERING Bd. 3, Nr. 4, Januar 1985, LONDON (GB) Seiten 255 - 258 BUTTERWORTH ET AL 'System X: Common-Channel Signalling--- Progress on Installation and Testing
- PATENT ABSTRACTS OF JAPAN vol. 6, no. 254 (E-148)(1132) 14. Dezember 1982 & JP-A-57 152 759

## Beschreibung

Die Erfindung betrifft ein Verfahren zur Überwachung bestehender Fernsprechverbindungen, insbesondere permanent geschalteter Fernsprechverbindungen, gemäß dem Oberbegriff des Patentanspruchs 1.

Die Überwachung auf fehlerfreie Durchschaltung von Fernsprechverbindungen wird bisher in Form einer verbindungsindividuellen Durchschalteprüfung (Cross Office Check, COC) vorgenommen, indem nach durchgeführtem Verbindungsaufbau von der den rufenden Teilnehmer betreffenden Leitungsschnittstelle und Anschlußlage aus Prüfbitmuster zu der den gerufenen Teilnehmer betreffenden Leitungsschnittstelle und Anschlußlage übertragen und von dort, ohne daß schon eine Durchschaltung zum Teilnehmer erfolgt ist, wieder zur Anschlußlage des rufenden Teilnehmers zurückgespiegelt werden. Sofern die empfangenen Prüfbitmuster nicht den gesendeten entsprechen, liegt ein Durchschaltefehler vor.

Eine Beschränkung der Überwachung von Fernmeldeverbindungen auf die geschilderte, vor der eigentlichen Durchschaltung vorgenommene Überwachung ist insbesondere für permanent durchgeschaltete Verbindungen, sogenannte Nailed-UP-Connections, (NUC-Verbindungen) nicht befriedigend. Eine Unterbrechung solcher Verbindungen und anschließender erneuter Aufbau lediglich zum Zwecke der Durchführung der geschilderten Verbindungswegdurchschalteprüfung kommt nicht in Frage.

Bisher konnte bei solchen permanent durchgeschalteten Verbindungen eine Fehlersuche daher erst auf entsprechende Teilnehmerbeschwerden hin vorgenommen werden, der dann eine relativ aufwendige Fehlerbeseitigung zur Folge hatte.

Aus der europäischen Patentanmeldung EP-A-0 250 936 ist es bekannt, zum Zwecke der Überwachung permanent durchgeschalteter Verbindungen zum einen die von den gedoppelten Koppelnetzteilen zur Leitungsseite hin übertragenen Informationen mitlaufend bitweise miteinander zu vergleichen, und zum anderen die weiterzuübertragenden Informationen mit einem Paritybit zu versehen und nach Durchlaufen sämtlicher Einheiten der Peripherie einer Parityprüfung zu unterwerfen bzw. die von angeschlossenen Teilnehmerleitungen oder Übertragungsleitungen kommenden Informationen in der Leitungsschnittstelle der Peripherie mit einem Paritybit zu versehen und nach Durchlaufen der peripheren Einheiten der Vermittlungsstelle ebenfalls einer Parityprüfung zu unterwerfen. Ein solches Prüfkonzept erfordert einen relativ hohen Aufwand und ist insbesondere bei einer Gliederung der Vermittlungsstellenperipherie in Baugruppen mit einer Vielzahl von Ein- und Ausgangsanschlüssen wenig geeignet.

Aus der deutschen Offenlegungsschrift DE 35 13 165 A1 ist eine Schaltanordnung für Fernmeldevermittlungsanlagen mit Einrichtungen zur Funktionsfähigkeitsprüfung durchgeschalteter Verbindungen bekannt. Die Prüfung erfolgt unter Herstellung einer Parallelverbindung. Hierzu werden Verbindungsherstellungsdaten zur Herstellung einer Parallelverbindung gespeichert. Die Prüfvorgänge werden in zeitlich regelmäßigen Abständen durchgeführt und anhand der gespeicherten Vermittlungsdaten wird für jeden Prüfvorgang erneut eine Parallelverbindung aufgebaut, die während derselben aufrechterhalten und danach wieder ausgelöst wird. Die Durchschaltung der Parallelverbindung veranlasst einen Vergleicher, einen Vergleich durchzuführen. Auch eine solche Vorgehensweise erfordert einen hohen Aufwand.

Die Aufgabe der Erfindung besteht daher darin, ein Verfahren zur Überwachung bestehender Fernsprechverbindungen, insbesondere permanent geschalteter Fernsprechverbindungen anzugeben, das diesbezüglich günstiger ist.

Diese Aufgabe wird durch die im Kennzeichen des Patentanspruchs 1 angegebenen Maßnahmen gelöst.

Demnach werden je Zeitkanal zusätzlich zu einem Vergleich der von den beiden gekoppelten Koppelnetzhälften kommenden Informationen die Informationen beider Übertragungsrichtungen jeweils außer in dem betreffenden zugeteilten Zeitkanal in einem gesonderten Zeitkanal auf einem Parallelweg übertragen und dann mit der Originalinformation verglichen.

Die Abzweigung in den erwähnten gesonderten Zeitkanal erfolgt für beide Übertragungsrichtungen in der Leitungsschnittstelle der Peripherie, wogegen der Vergleich in der koppelfeldseitigen Schnittstelle der Periphereie der Vermittlungsstelle stattfindet. Die von dem Koppelnetz in Richtung der angeschlossenen Teilnehmer- oder Verbindungsleitungen übertragenen Informationen werden hierzu in der Leitungsschnittstelle gespiegelt und in dem erwähnten gesonderten Zeitkanal zu der koppelfeldseitigen Schnittstelle hin zurückübertragen. Die von den Teilnehmer- oder Verbindungsleitungen kommenden Informationen werden dagegen in der Leitungsschnittstelle von dem Sendekanal abgezweigt und ebenfalls in dem erwähnten gesonderten Zeitkanal zu der koppelfeldseitigen Schnittstelle hin übertragen.

Um auch zentrale Fehler im Sprechweg erfassen zu können, die sich auf sämtliche der durchgeschalteten Verbindungen auswirken können, wird zwischen den die einzelnen Zeitkanäle betreffenden Prüfschritten jeweils in dem gesonderten Zeitkanal ein von einem Prüfmustergenerator geliefertes Prüfbitmuster in der koppelfeldseitigen Schnittstelle in diesen gesonderten Zeitkanal eingespeist, bis zur leitungsseitigen Schnittstelle übertragen, dort gespiegelt und wieder bis zur koppelfeldseitigen Schnittstelle zurückübertragen, wo ein Vergleich mit dem ausgesendeten Prüfbitmuster erfolgt.

Gemäß einer Ausgestaltung der Erfindung wird als gesonderter Zeitkanal der im Zuge des Vermittlungsbetriebs für die Signalisierungsinformationsübertragung dienende Zeitkanal ausgenutzt.

Nachstehend wird die Erfindung anhand eines Ausführungsbeispiels unter Bezugnahme auf eine Zeichnung näher erläutert.

In der Zeichnung zeigen:
- FIG 1: das Prinzipschaltbild einer digitalen Fernsprechvermittlungsstelle,
- Figuren 2 bis 5: Teile dieses Prinzipschaltbildes mit jeweils für einen einzelnen der erfindungsgemäßen Verfahrensschritte hervorgehoben dargestellten Ubertragungswegen und Teileinrichtungen.

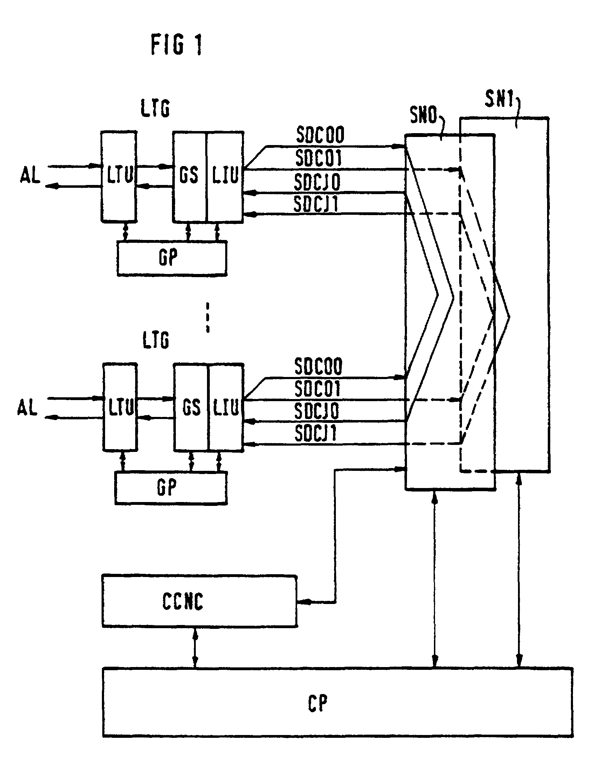

Gemäß FIG 1 ist eine digitale Zeitmultiplex-Fernsprechvermittlungsstelle gegliedert in eine gedoppeltes Koppelnetz mit den Koppelnetzhälften SN0 und SN1, einen Anschlußgruppen LTG umfassenden Anschlußbereich, sowie in ein Netz CCNC zur Steuerung der zentralen Zeichengabekanäle. Diese Bestandteile stehen direkt oder indirekt unter dem Steuereinfluß eines Koordinationsprozessors CP.

Die Anschlußgruppen LTG des Anschlußbereichs sind ihrerseits gegliedert in ein Gruppenkoppelfeld GS, eine zentralkoppelfeldseitige Schnittstelle LIU sowie an eine leitungsseitige Leitungsschnittstelle LTU, deren Ausbildung davon abhängt, ob sie dem Anschluß mit anderen Vermittlungsstellen verbindenden Verbindungsleitungen VL oder dem Anschluß von Teilnehmeranschlußleitungen AL dient. Der Gruppenkoppler GS und die koppelfeldseitige Schnittstelle LIU sind vorzugsweise baulich miteinander vereinigt. Die erwähnten Teile der Anschlußgruppen LTG stehen jeweils unter dem Steuereinfluß eines gruppenindividuellen Gruppenprozessors GP.

Zwischen den zentralkoppelfeldseitigen Schnittstellen LIU der Anschlußgruppen LTG und jeder der Hälften SN0 und SN1 des zentralen Koppelfeldes bestehen Verbindungen über jeweils eine Multiplexleitung SDC00 und SDC01 in der einen Übertragungsrichtung und Multiplexleitung SDCI0 und SDCI1 in der anderen Übertragungsrichtung.

Im Falle einer über das zentrale Koppelnetz führenden Verbindungsherstellung werden in beiden Koppelnetzhälften SN0 und SN1 identische Verbindungswege durchgeschaltet, wobei jedoch nur die von der einen Koppelnetzhälfte, der momentan aktiven Koppelnetzhälfte, stammenden Informationen von der koppelnetzseitigen Schnittstelle LIU zur Peripherie hin weitergegeben werden. Im Falle einer Störung der aktiven Koppelnetzhälfte erfolgt eine Umschaltung auf die andere Koppelnetzhälfte, ohne daß es zu Unterbrechungen bestehender Verbindungen kommt.

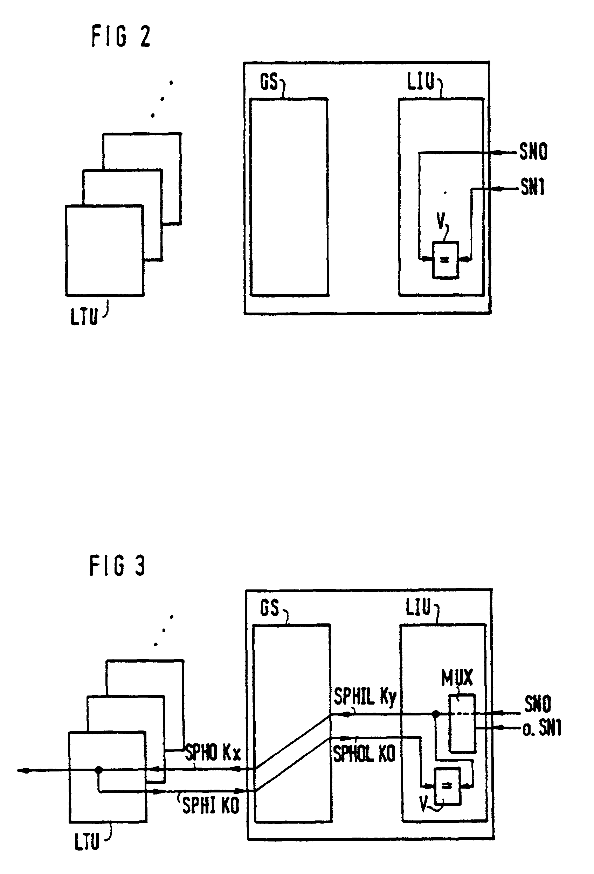

In der FIG 2, in der der erste Verfahrensschritt des erfindungsgemäßen Verfahrens veranschaulicht ist, sind lediglich Teile des Anschlußbereichs einer Fernsprechvermittlungsstelle angedeutet, nämlich der Gruppenkoppler GS und die zentralkoppelnetzseitige Schnittstelle LIU einer Anschlußgruppe LTG, sowie eine Reihe von leitungsseitigen Schnittstellen LTU einer Mehrzahl solcher Anschlußgruppen. Wie in dieser Figur angedeutet wird, wird in einem ersten Schritt des erfindungsgemäßen Verfahrens jeweils in dem Zeitkanal einer bestehenden Verbindung, insbesondere permanent geschalteter Verbindung, mittels eines Vergleichers V, der Bestandteil der betreffenden zentralkoppelfeldseitigen Schnittstelle LIU ist ein Vergleich der von den beiden Koppelnetzhälften SN0 und SN1 herkommenden Informationen vorgenommen. Diese Informationen gehen, wie dargelegt, auf dieselbe Ursprungsinformation zurück und müssen daher bei ordnungsgemäß funktionierender Verbindung miteinander übereinstimmen.

Die FIG 3 veranschaulicht den nächsten Schritt des erfindungsgemäßen Verfahrens. Hiernach werden für den betreffenden betrachteten Zeitkanal Ky diejenigen der von den beiden Koppelnetzhälften kommenden Informationen, die zur Weitergabe bestimmt sind, was gemäß der Darstellung in FIG 3 die von der Koppelnetzhälfte SN0 kommenden Informationen sein sollen, bis zu der betreffenden Leitungsschnittstelle LTU übertragen, wobei die die Schnittstelle LIU und den Gruppenkoppler GS verbindende Multiplexleitung SPHIL, der Gruppenkoppler GS und die den Gruppenkoppler mit der betreffenden Leitungsschnittstelle LTU verbindende Multiplexleitung SPHO durchlaufen wird.

In der Leitungsschnittstelle LTU erfolgt eine Spiegelung in den Zeitkanal K0, der normalerweise nicht für die Sprachübertragung, sondern zur Übertragung von Signalisierinformationen verwendet wird. In diesem Zeitkanal erfolgt auf demselben Verbindungsweg, nämlich über die Sprachmultiplexleitungen der Gegenrichtung SPHI und SPHOL sowie über den Gruppenkoppler GS eine Rückübertragung zu der zentralkoppelfeldseitigen Schnittstelle LIU, wo mittels der schon erwähnten Einrichtung V ein Vergleich mit der vorgenannten, vom Koppelnetzteil SN0 im Zeitkanal Ky angelieferten Information stattfindet.

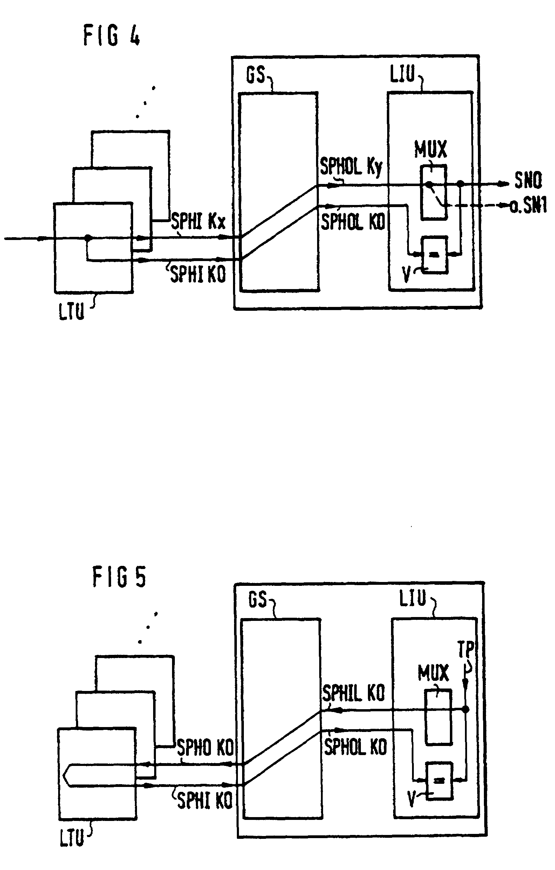

Die FIG 4 veranschaulicht einen weiteren Schritt des erfindungsgemäßen Verfahrens, der die Behandlung der von den angeschlossenen Teilnehmer- oder Verbindungsleitungen AL kommenden Informationen betrifft.

Wie in dieser Figur veranschaulicht, werden diese in der Leitungsschnittstelle LTU von dem hier mit Kx bezeichneten Zeitkanal, in dem sie angeliefert werden, auf den gesonderten Zeitkanal K0 abgezweigt und von da an auf demselben Übertragungsweg wie der Inhalt des Originalkanals Kx, also auf der Leitungsschnittstelle LTU und Gruppenkoppeler GS verbindenden Multiplexleitung SPHI, über den Gruppenkoppler GS sowie auf der diesen mit der Schnittstelle LIU verbindenden Multiplexleitung SPHOL zu der letztgenannten Schnittstelle LIU übertragen. Dort findet dann ein Vergleich der Kanalinhalte der Kanäle Kx und K0 mittels des Vergleichers statt.

Durch die vorstehend beschriebenen Verfahrensschritte werden die kanalindividuell wirkenden Teile des Sprechweges in der Vermittlungsstelle überwacht.

Bevor zur Überprüfung eines weiteren Zeitkanals bzw. einer weiteren bestehenden Verbindung übergegangen wird, erfolgt gemäß einem abschließenden Schritt des erfindungsgemäßen Verfahrens eine Überprüfung zentraler Anteile des Sprechweges.

Wie in der FIG 5 veranschaulicht, wird hierzu in der zentralkoppelnetzseitigen Schnittstelle LIU ein Prüfmuster in den vorher erwähnten Zeitkanal K0 eingespeist, bis zur Leitungsschnittstelle LTU übertragen, dort in den Zeitkanal K0 der Gegenrichtung gespiegelt und wieder zur Schnittstelle LIU zurückübertragen, wo ein Vergleich mit dem dort eingespeisten Prüfmuster stattfindet.

Die Ergebnisse der vorgenannten Prüfschritte werden jeweils an den Gruppenprozessor GP der betreffenden Anschlußgruppe LTG gemeldet, der im Gutfall die Ausführung des nächsten Prüfschrittes und im Fehlerfall eine Wiederholung des betreffenden Prüfschrittes veranlaßt. Bei Bestätigung des Fehlers erfolgt eine Fehlermeldung an den Koordinationsprozessor CP.

Auch beim Aufbau von permanent durchgeschalteten Verbindungen wird die eingangs geschilderte verbindungsindividuelle Durchschalteprüfung (COC) durchgeführt.

## Patentansprüche

1. Verfahren zur Überwachung bestehender Fernsprechverbindungen, insbesondere permanent geschalteter Fernsprechverbindungen, in einer digitalen Zeitmultiplex-Fernsprechvermittlungsstelle unter Einschluß des gedoppelten zentralen Koppelnetzes und der Bestandteile des peripheren Anschlußbereichs der Vermittlungsstelle, demgemäß
a) je Zeitkanal die von den beiden Koppelnetzhälften kommenden Informationen miteinander verglichen werden,
**dadurch gekennzeichnet,**
**daß** ferner je Zeitkanal nacheinander
b) diejenigen der von den beiden Koppelnetzhälften (SN0, SN1) kommenden Informationen, die zur Weitergabe bestimmt sind, in der die jeweilige Verbindung betreffende Leitungsschnittstelle (LTU) für den Anschluß von Teilnehmeranschluß- oder Verbindungsleitungen (AL, abgezweigt, auf einen gesonderten Zeitkanal (K0) gespiegelt und bis zur zentralkoppelfeldseitigen Schnittstelle (LIU) des peripheren Bereichs zurückübertragen und dort mit dem genannten, vom Koppelnetz kommenden Informationen verglichen werden,
c) die von den angeschlossenen Teilnehmer- oder Verbindungsleitungen (AL) kommenden Informationen in der genannten Leitungsschnittstelle (LTU) von dem Zeitkanal (Kx), in dem sie auftreten, abgezweigt und von da an auf demselben Verbindungsweg wie der Originalzeitkanal (Kx) in dem genannten gesonderten Zeitkanal (K0) bis zu der genannten zentralkoppelfeldseitigen Schnittstelle (LIU) geführt und dort mit den Informationen des Originalzeitkanals vergleichen werden,
d) und daß vor jedem Wechsel zu den einen weiteren Zeitkanal betreffenden Prüfschritten gemäß den Merkmalen a) bis c) in dem genannten gesonderten Zeitkanal (K0) ein in der zentralkoppelfeldseitigen Schnittstelle (LIU) zugeführtes Prüfwort bis zur betreffenden Leitungsschnittstelle (LTU) übertragen, dort gespiegelt und wieder bis zur zentralkoppelnetzseitigen Schnittstelle LIU zurückübertragen und dort mit dem Muster des zugeführten Prüfwortes verglichen wird.

2. Verfahren nach Anspruch 1,
**dadurch gekennzeichnet,**
**daß** als gesonderter Zeitkanal (K0) der im Zuge des Vermittlungsbetriebs für die Übertragung von Signalisierungsinformationen dienende Zeitkanal ausgenutzt wird.

## Claims

1. Method for monitoring existing telephone connections, especially nailed-up telephone connections, in a digital time-division multiplex telephone switching centre including the duplicated central switching network and the components of the peripheral access area of the switching centre, according to which
a) the information items coming from the two switching network halves are compared with one another for each time slot,
**characterized in that**, furthermore, successively for each time slot,
b) those of the information items coming from the two switching network halves (SN0, SN1) which are intended for forwarding are branched off in the line trunk unit (LTU) relating to the respective connection for connecting subscriber lines or trunk lines (AL), mirrored onto a separate time slot (K0) and transmitted back to the line interface unit (LIU) at the central switching network, and of the peripheral area coming from the are there compared with the said information items, switching network,
c) the information items coming from the connected subscriber lines or trunk lines (AL) are branched off in the said line trunk unit (LTU) from the time slot (Kx) in which they occur and from there are conducted along the same connecting path as the original time slot (Kx) in the said separate time slot (K0) to the said line interface unit (LIU) at the central switching network, and are there compared with the information items of the original time slot,
d) and that, before each change to the test steps relating to a further time slot, according to features a) to c), in the said separate time slot (K0), a test word supplied in the line interface unit (LIU) at the central switching network is transmitted to the relevant line trunk unit (LTU), is there mirrored and transmitted back to the line interface unit LIU at the central switching network, and is there compared with the pattern of the test word supplied.

2. Method according to Claim 1, **characterized in that** the time slot used for transmitting signalling information in the switching operation is utilized as the separate time slot (K0).

## Revendications

1. Procédé de contrôle de connexions téléphoniques existantes, en particulier de connexions téléphoniques commutées d'une façon permanente, dans un central téléphonique numérique à multiplexage dans le temps en incluant le réseau de connexion central doublé et les éléments constitutifs de la zone de raccordement périphérique du central, en conséquence
a) pour chaque créneau temporel, les informations arrivant des deux moitiés de réseau de connexion sont comparées ensemble,
**caractérisé en ce qu'**en outre et successivement pour chaque créneau temporel
b) les informations venant des deux moitiés de réseau de connexion (SN0, SN1) qui sont destinées à la retransmission, dans laquelle est dérivée l'interface de ligne (LTU) relative à la connexion respective pour le raccordement de lignes d'abonné ou de lignes de jonction (AL), sont réfléchies sur un créneau temporel particulier (KO) et sont retransmises jusqu'à l'interface du côté du réseau de connexion central (LIU) de la zone périphérique et là sont comparées à l'information citée venant du réseau de connexion,
c) les informations venant des lignes de jonction ou d'abonné raccordées (AL) dans l'interface de ligne citée (LTU) sont dérivées du créneau temporel (Kx) dans lequel elles apparaissent et, de là, sont guidées sur le même trajet de jonction que le créneau temporel original (Kx) dans le créneau temporel particulier cité (KO) jusqu'à l'interface citée du côté du réseau de connexion central (LIU) et, là, sont comparées aux informations du créneau temporel original,
d) et **en ce qu'**avant chaque changement vers les étapes d'essai relatives à un autre créneau temporel selon les caractéristiques a) à c) dans le créneau temporel particulier cité (KO), un mot d'essai acheminé dans l'interface du côté du réseau de connexion central (LIU) est transmis jusqu'à l'interface de ligne en question (LTU), là est réfléchi et est de nouveau retransmis jusqu'à l'interface du côté du réseau de connexion central (LIU) et y est comparé au modèle de mot d'essai acheminé.

2. Procédé selon la revendication 2, **caractérisé en ce que** le créneau temporel servant en fonction du central pour la transmission d'informations de signalisation est utilisé comme créneau temporel particulier (KO).
